Europäisches Patentamt

European Patent Office

Office européen des brevets

(11) Publication number: **0 058 950**
A2

# EUROPEAN PATENT APPLICATION

(21) Application number: **82101246.5**

(22) Date of filing: **18.02.82**

(51) Int. Cl.³: **B 60 G 11/08**, B 60 G 11/10, B 60 G 7/04

(30) Priority: **20.02.81 JP 23581/81**

(43) Date of publication of application: **01.09.82**
**Bulletin 82/35**

(84) Designated Contracting States: **DE FR GB**

(71) Applicant: **NISSAN MOTOR COMPANY, LIMITED, No.2, Takara-cho, Kanagawa-ku, Yokohama-shi Kanagawa-ken 221 (JP)**

(72) Inventor: **Yokote, Masatsugu, 1, Natsushima-cho, Yokosuka-shi Kanagawa-ken (JP)**

(74) Representative: **Patentanwälte TER MEER - MÜLLER - STEINMEISTER, Triftstrasse 4, D-8000 München 22 (DE)**

(54) **Independent wheel suspension mechanism of automotive vehicle.**

(57) An independent wheel suspension mechanism of an automotive vehicle, comprising a knuckle member (11) having a wheel axle of the vehicle rotatably supported thereon; a transverse link member (13) partially extending in a lateral direction of the vehicle and pivotally connected at one end thereof to the knuckle member (11) and at the other end thereof to the vehicle body structure (B), the transverse link member (13) being thus rockable at the aforesaid other end thereof about an axis directed in a fore-and-aft direction of the vehicle; and at least one leaf spring (18) extending in part in parallel with and above the transverse link member (13), the leaf spring (18) having one end portion held in elastically pressing engagement with one end portion of the transverse link member (13) and being connected at the other end thereof to the vehicle body structure (B).

0058950

## DESCRIPTION

The present invention relates to an independent wheel suspension mechanism of an automotive vehicle.

In accordance with the present invention, there is provided an independent wheel suspension mechanism of an automotive vehicle having a vehicle body structure and a wheel axle for a road wheel, comprising a knuckle member having the wheel axle rotatably supported thereon; at least one transverse link member at least partially extending substantially in a lateral direction of the vehicle and pivotally connected at one end thereof to the knuckle member and at the other end thereof to the vehicle body structure, the link member being thus rockable at the aforesaid other end thereof about an axis fixed with respect to the vehicle body structure and directed substantially in a fore-and-aft direction of the vehicle; and at least one leaf spring extending at least in part substantially in parallel with and above the transverse link member, the leaf spring having one end portion held in elastically pressing engagement with one end portion of the transverse link member and being connected at the other end thereof to the vehicle body structure. The leaf spring included in the independent wheel suspension mechanism thus constructed may have its laterally outer end portion held in elastically pressing engagement with the above mentioned end portion of the transverse link member in a vertical direction and is connected at its laterally inner end to the vehicle body structure. The leaf spring may have its laterally outer end portion held in downwardly pressing engagement with the aforesaid end portion of the transverse link member.

In the independent wheel suspension mechanism constructed and arranged as above described, the leaf spring may be either securely connected at the aforesaid one end to the vehicle body structure or pivotally connected at its one end to the vehicle body structure and is rockable about an axis fixed with respect to the vehicle body structure and directed substantially in a fore-and-aft direction of the vehicle.

The independent wheel suspension mechanism according to the present invention may further comprise an elastic member closely interposed between the aforesaid one end portion of the leaf spring and the aforesaid one end portion of the transverse link member. Furthermore, the leaf spring may have an intermediate fulcrum portion held in engagement with the vehicle body structure. In this instance the wheel suspension mechanism may further comprise an elastic pivot member closely interposed between the intermediate fulcrum portion and the vehicle body structure.

Drawbacks of a prior-art independent wheel suspension mechanism and the detailed construction and arrangement of an independent wheel suspension mechanism according to the present invention will be understood from the following description taken in conjunction with the accompanying drawings, in which:

Fig. 1 is a front elevation view showing a lateral half of a representative example of a prior-art strut-type independent wheel suspension mechanism;

Fig. 2 is a view similar to Fig. 1 but shows a lateral half of a strut-type independent wheel suspension mechanism embodying the present invention;

Fig. 3 is a perspective view showing another form of strut-type independent wheel suspension mechanism embodying the present invention, the suspension mechanism herein shown being suitable particularly for installation on an automotive vehicle of the front-engine, front-drive design;

Fig. 4 is a fragmentary sectional view taken in a lateral direction of the vehicle along line IV-IV in Fig. 3;

Fig. 5 is a sectional view also taken in a lateral direction of the vehicle but along line V-V in Fig. 3;

Fig. 6 is a front elevation view showing a double-wishbone-type independent wheel suspension mechanism embodying the present invention;

Fig. 7 is a front elevation view showing, partially in cross section, a modification of the embodiment shown in Fig. 2;

Fig. 8 is a view showing the condition in which the leaf spring forming part of the suspension mechanism of Fig. 7 is deformed under load;

Fig. 9 is a front elevation view showing, partially in cross section, a modification of the embodiment shown in Fig. 6;

Fig. 10 is a view similar to Fig. 9 but shows another modification of the embodiment of Fig. 6;

Fig. 11 is a sectional view taken along line XI-XI in Fig. 2 and showing, to an enlarged scale, the detailed construction of the rubber bush assembly included in each of the embodiments of Figs. 2 to 10 except for the embodiment of Fig. 3;

Fig. 12 is a front elevation view showing another modification of the embodiment of Fig. 2;

Fig. 13 is a view showing, to an enlarged scale, the detailed construction and arrangement of the bush assembly incorporated in the embodiment of Fig. 12; and

Fig. 14 is a view similar to Fig. 13 but shows a modification of the bush assembly included in the embodiment of Fig. 11.

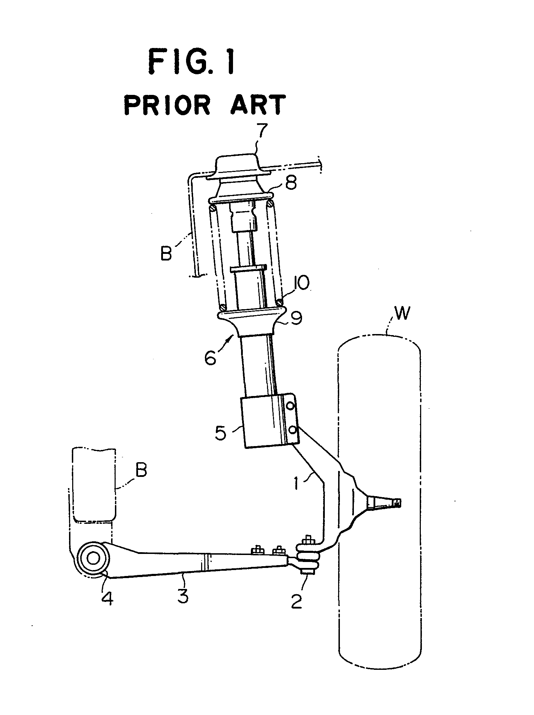

Referring to Fig. 1 of the drawings, a strut-type independent wheel suspension mechanism intervenes between the vehicle body structure B and a wheel axle assembly (not shown) for a road wheel W and comprises a knuckle spindle 1 having a spindle portion on which the wheel axle is rotatable. The knuckle spindle 1 further has upper and lower arm portions projecting inwardly in lateral directions of the vehicle body structure B. The lower arm portion of the knuckle spindle 1 is connected by a ball-and-socket joint 2 to a transverse link member 3 extending in a lateral direction of the vehicle body structure B. The transverse link member 3 in turn is connected at the inner end thereof to a lower structural member of the vehicle body structure B by means of a bush assembly 4. On the other hand, the upper arm portion of the knuckle spindle 1 is securely connected by a bracket member 5 to a vertically extending strut assembly 6 having a fluid-operated shock absorber incorporated therein. The strut assembly 6 is securely connected at the lower end thereof to the knuckle spindle 1 through the bracket member 5 and rockably connected at the upper end thereof to a strut mounting unit 7 secured to the vehicle body structure B. The strut assembly 6 has secured thereto upper and lower spring seat flange members 8 and 9 which are vertically spaced apart from each other along the strut assembly 6. A helical compression spring 10 is provided in such a manner as to encircle an upper axial portion of the strut assembly 6 and is seated between the upper and lower spring seat flange members 8 and 9. The compression spring 10 thus arranged is adapted to attenuate bouncing motions and vertical vibrations of the road wheel W.

The helical compression spring 10 in the conventional independent wheel suspension mechanism thus constructed is located upwardly of the road wheel W so as not to interfere with the rotation of the wheel W. Such arrangement of the spring 10 adds to the vertical overall measurement of the suspension mechanism as a whole, reducing the space available in the engine compartment if the suspension mechanism is used as the front-wheel suspension system or in the rear trunk room if the suspension mechanism is used as the rear-wheel suspension system. This adds to the severity of the space requirement for the installation of the engine compartment especially in an automotive vehicle of the front-engine, front-drive design or of the trunk room in a modern small-sized automotive vehicle.

Because, furthermore, the spring 10 has a relatively large diameter and is located in the neighborhood of the region where the strut assembly 6 is connected to the vehicle body structure B, strict design consideration must be paid to determine the dimensions of the individual component members of the suspension mechanism. This is also a serious problem in consideration of the fact that the dimensions of the component members of the suspension mechanism are predominant over the drivability of the vehicle as is well known in the art.

When a prior-art suspension mechanism of the described nature is used as the front-wheel suspension system, the vertical position of the spring 10 with respect to the vehicle body structure B sometimes dictates the height of the front engine hood. For this reason, the arrangement of the spring 10 may restrict the external styling and the aerodynamic performance characteristics of the vehicle.

An independent wheel suspension system is known which uses a torsion bar spring as an alternative of the helical compression spring of a strut-type wheel suspension system. Problems are however also encountered in an automotive vehicle using such a suspension system. One of the problems is that a disproportionately large number of members and elements must be used for having the torsion bar anchored to the vehicle body structure B and, for this reason, not only add to the overall weight of the suspension system as a whole but makes the suspension mechanism and the associated units and assemblies extremely intricate in construction and arrangement.

The present invention contemplates solution of these problems encountered in conventional strut-type or torsion-bar-type wheel suspension systems of automotive vehicles.

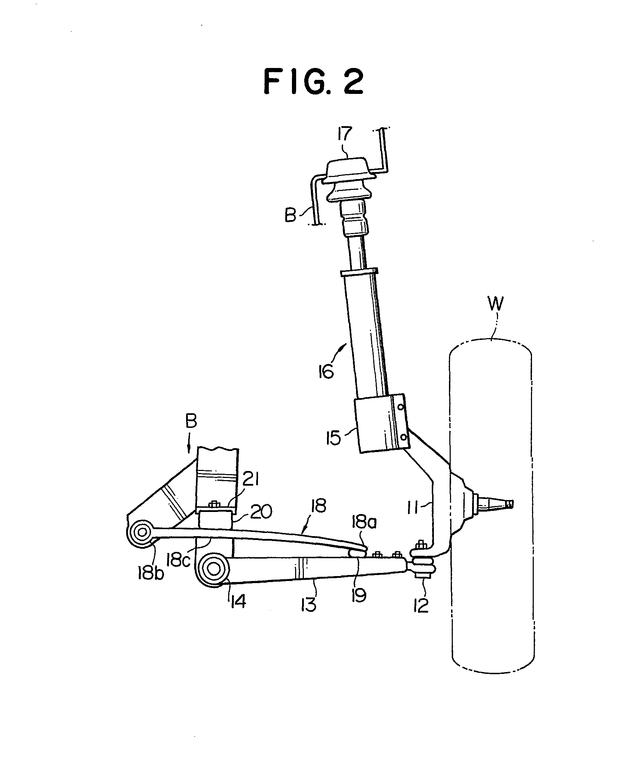

Referring to Fig. 2 of the drawings, a strut-type wheel suspension mechanism is also shown intervening between the vehicle body structure B and a wheel axle assembly (not shown) for a road wheel W.  The suspension mechanism shown in Fig. 2 is one of the right and second wheel suspension mechanisms respectively arranged in conjunction with the two front or rear road wheels and the associated wheel axle assemblies of an automotive vehicle and, thus, the other of the two suspension mechanisms is a symmetrical version of the suspension mechanism herein shown.  The shown wheel suspension mechanism comprises a knuckle spindle 11 having a spindle portion journaled in bearings (not shown) on the wheel axle. The knuckle spindle 11 further has upper and lower arm portions projecting inwardly in lateral directions of the vehicle body structure B.  The lower arm portion of the knuckle spindle 11 is connected by a ball-and-socket joint 12 to a transverse link member 13 longitudinally extending in a lateral direction of the vehicle body structure B.  The transverse link member 13 thus connected at the laterally outer end thereof to the knuckle spindle 11 is connected at the laterally inner end thereof to a lower structural member of the vehicle body structure B by means of a bush assembly 14.  The knuckle spindle 11 is thus pivotally and rockably connected to the transverse link member 13 which is pivotally connected to the vehicle body structure B.  On the other hand,

- 8 -  0058950

the upper arm portion of the knuckle spindle 11 is securely connected by a bracket member 15 to a vertically extending suspension strut assembly 16 having a direct-acting, fluid-operated shock absorber incorporated therein. The strut assembly 16 is securely connected at the lower end thereof to the knuckle spindle 11 through the bracket member 15 and rockably connected at the upper end thereof to a strut mounting unit 17 secured to the vehicle body structure B.

The wheel suspension mechanism embodying the present invention further comprises a leaf spring 18 longitudinally extending substantially in a lateral direction of the vehicle body structure B in part above the transverse link member 13. The leaf spring 18 has a laterally outer end portion 18a, a laterally inner end portion 18b, and an intermediate portion constituting a fulcrum portion 18c which is located at a predetermined distance from the inner end portion 18b. The outer end portion 18a is held in pressing engagement with a laterally outer end portion of the transverse link member 13 through an elastic member 19 of, for example, rubber, while the inner end portion 18b of the leaf spring 18 is pivotally connected to a lower structural member of the vehicle body structure B as shown. The leaf spring 18 is thus rockable in its entirety about an axis fixed with respect to the vehicle body structure B and directed substantially in a fore-and-aft direction of the vehicle. On the other hand, the intermediate fulcrum portion 18c of the leaf spring 18 has its upper face elastically held in contact with an elastic pivot member 20 of, for example, rubber, secured to the vehicle body structure

B by means of a bracket member 21. If desired, the fulcrum portion 18c of the leaf spring 18 may be securely and rigidly connected to the vehicle body structure B directly, viz., without intervention of the elastic pivot member 20. The leaf spring 18 arranged as described above is preferably constructed of a fiber reinforced plastic (FRP) such as glass fiber reinforced plastic (GFRP) or carbon fiber reinforced plastic (CFRP).

The leaf spring 18 thus intervening between the transverse link member 13 and the vehicle body structure B in the wheel suspension mechanism constitutes a cantilever extending from the laterally inner end portion 18b thereof and having its laterally outer end portion 18a elastically pressed downwardly with respect to the vehicle body structure B. The knucle spindle 11 to which the transverse link member 13 is coupled at the laterally outer end thereof is therefore elastically connected to the vehicle body structure B by means of the leaf spring 18 so that the shocks and vibrations produced in vertical directions in the knucle spindle 11 and accordingly in the transverse link member 13 are taken up not only by the fluid-operated shock absorber incorporated in the strut assembly 16 but also by the leaf spring 18 before the shocks and vibrations are transferred to the vehicle body structure B. The leaf spring 18 provided in the embodiment of the present invention as above described thus functions similarly to the helical compression spring in a prior-art strut-type wheel suspension mechanism of the described nature.

Since the wheel suspension mechanism according to the present invention uses the leaf spring 18 in lieu of a helical compression spring as used in a prior-art wheel suspension mechanism of the described nature, the strut assembly 16 incorporated therein can be designed to have a significantly reduced axial length as compared with the strut assembly 10 in the prior-art suspension mechanism shown in Fig. 1. The strut assembly 16 in the wheel suspension mechanism can for this reason be connected to the vehicle body structure B at a level lowered with respect to the vehicle body structure B and permits the designer of an automotive vehicle to sufficiently reduce the height of the front engine hood when in designing and engineering the vehicle. Since, furthermore, there are no such members as the helical compression spring and the associated spring seat flange members provided in conjunction with the strut assembly 16 in the wheel suspension mechanism, an additional space is available around an upper portion of the strut assembly 16 and thus alleviates the severity of the space requirement for the installation of the wheel suspension system in an automotive vehicle, providing improved drivability of the vehicle. Using a fiber reinforced plastic such as the glass or carbon fiber reinforced plastic as the material of the leaf spring 18 will contribute to reduction of the weight of the wheel suspension system and accordingly the total weight of the vehicle as a whole.

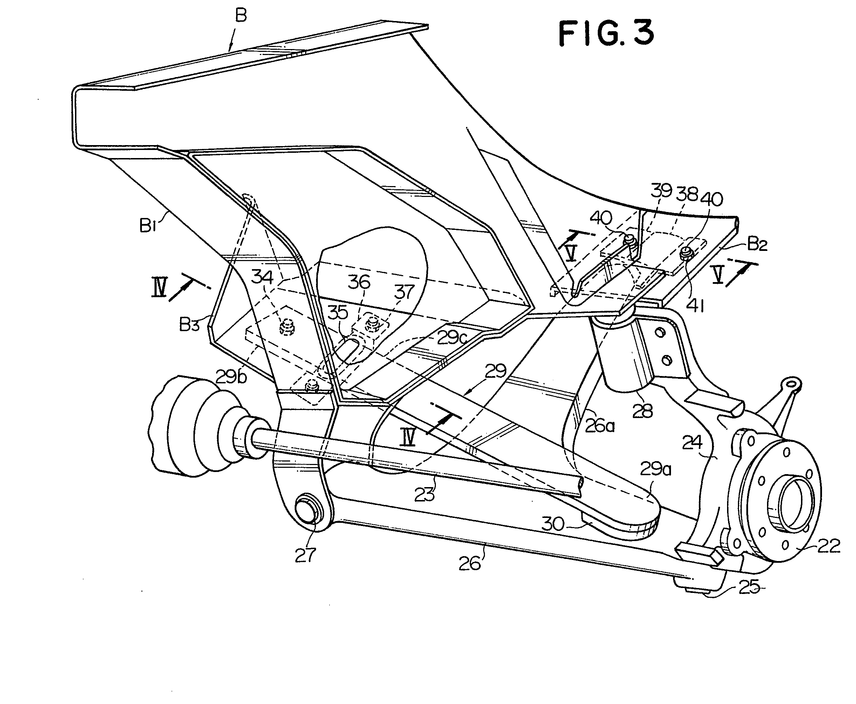

Fig. 3 of the drawings shows a second preferred embodiment of a wheel suspension mechanism according to the present invention. The suspension mechanism herein shown is suitable for installation on an automotive vehicle of particularly the

0058950

front-engine, front-drive design and is one of the two suspension mechanisms which are arranged respectively in conjunction with the two front road wheels and the associated wheel axle assemblies of the vehicle.

In Fig. 3, one of the two wheel axle assemblies is shown including a front wheel hub 22 having a front road wheel (not shown) securely attached thereto by suitable fastening means such as bolts and nuts. The wheel axle assembly is connected to a front drive shaft 23 extending from the front final reduction gear unit (not shown) of the vehicle driveline in a lateral direction of the vehicle.

The wheel suspension mechanism provided in association with the axle assembly comprises a knuckle 24 having the wheel hub 22 rotatably mounted thereon by suitable bearings (not shown). The knuckle 24 has upper and lower arm portions projecting inwardly in lateral directions of the vehicle body structure B. The lower arm portion of the knuckle 24 is connected by a ball-and-socket joint 25 to a transverse link member 26 partially extending in a lateral direction of the vehicle body structure B. The transverse link member 26 thus connected at the laterally outer end thereof to the knuckle 24 is connected at the laterally inner end thereof to a lower structural member $B_1$ of the vehicle body structure B by means of a bush assembly 27. The knuckle 24 is thus pivotally and rockably connected to the transverse link member 26 which is pivotally connected to the vehicle body structure B. On the other hand, the upper arm portion of the knuckle 24 is securely connected by a bracket member 28 to a vertically extending

- 12 -

0058950

suspension strut assembly (not shown) having a direct-acting, fluid-operated shock absorber incorporated therein. The strut assembly is securely connected at the lower end thereof to the knuckle 24 through the bracket member 28 and rockably connected at the upper end thereof to a side wall portion $B_2$ of the vehicle body structure B as in the wheel suspension mechanism described with reference to Fig. 2.

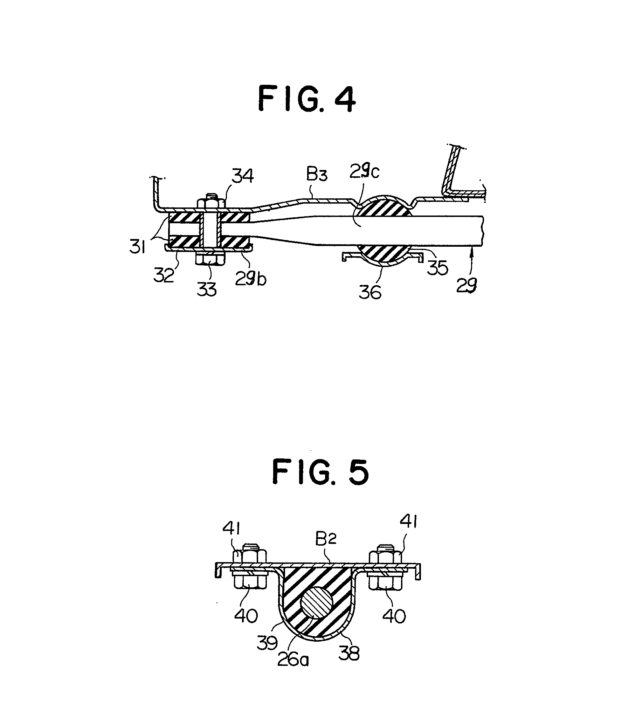

The wheel suspension mechanism shown in Fig. 3 further comprises a leaf spring 29 longitudinally extending substantially in a lateral direction of the vehicle body structure B in part above the transverse link member 26. The leaf spring 29 is constructed and arranged similarly to its counterpart in the embodiment of Fig. 2 and thus has a laterally outer end portion 29a, a laterally inner end portion 29b, and an intermediate portion constituting a fulcrum portion 29c located at a predetermined distance from the inner end portion 29b. The outer end portion 29a is held in pressing engagement with a laterally outer end portion of the transverse link member 26 through an elastic member 30 of, for example, rubber. The inner end portion 29b of the leaf spring 29 is pivotally connected to a lower structural member $B_3$ of the vehicle body structure B as indicated by broken lines in Fig. 3. As shown more clearly in Fig. 4 of the drawings, the inner end portion 29b of the leaf spring 29 is secured between a pair of elastic blocks 31 closely interposed between the structural member $B_3$ of the vehicle body structure B and a rigid bracket member 32 securely connected to the structural member $B_3$ by suitable fastening means such as a bolt 33 and a nut 34. The leaf spring 29 as a whole is thus elastically rockable about an axis fixed with respect to the vehicle body structure B and directed in a fore-and-aft direction of the vehicle. On the other hand, the intermediate fulcrum portion 29c of the leaf spring 29 is elastically held in pressing engagement with the above mentioned structural member $B_3$ of the vehicle body structure B by a cylindrical elastic pivot member 35 and a bracket member 36 as indicated by broken lines in Fig. 3 and more clearly in Fig. 4. The elastic pivot member 35 is formed with an opening extending perpendicularly to the axis of the pivot member 35 and having the fulcrum portion 29c of the leaf spring 29 closely passed therethrough. The pivot member 35 is received on the bracket member 36, which is securely attached to the structural member $B_3$ of the vehicle body structure B by suitable fastening means such as screws or bolts 37 as indicated in Fig. 3. The leaf spring 29 arranged as described above is also preferably constructed of a fiber reinforced plastic such as the glass fiber reinforced plastic or the carbon fiber reinforced plastic.

As shown in Fig. 3, the transverse link member 26 in the second embodiment of the present invention has an extension 26a extending generally in a fore-and-aft direction of the vehicle. The extension 26a has its leading end portion received in an elastic bush 38 of, for example, rubber. As indicated in broken lines in Fig. 3 and to an enlarged scale in Fig. 5 of the drawings, the elastic bush 38 is closely attached to the previously mentioned structural wall portion $B_2$ of the vehicle body structure B by a rigid bracket member 39 which is securely attached to the wall portion $B_2$ by suitable fastening means such as bolts 40 and nuts 41.

The leaf spring 29 intervening between the transverse link member 26 and the vehicle body structure B in the embodiment described above constitutes a cantilever extending from the inner end portion 29b thereof and having its laterally outer end portion 29a elastically pressed against a laterally outer end portion of the transverse link member 26 downwardly with respect to the vehicle body structure B. The knucle 24 to which the transverse link member 26 is coupled at the laterally outer end thereof is therefore elastically connected to the vehicle body structure B by means of the leaf spring 29 so that the shocks and vibrations produced in vertical directions in the knucle 24 and accordingly in the transverse link member 26 are taken up not only by the fluid-operated shock absorber incorporated in the suspension struts assembly (not shown) but also by the leaf spring 29 before the shocks and vibrations are transferred to the vehicle body structure B. The second embodiment of the present invention is thus essentially similar in effect to the embodiment of Fig. 2 although the former is more suitable for installation on an automotive vehicle of the front-engine, front-drive design than the latter.

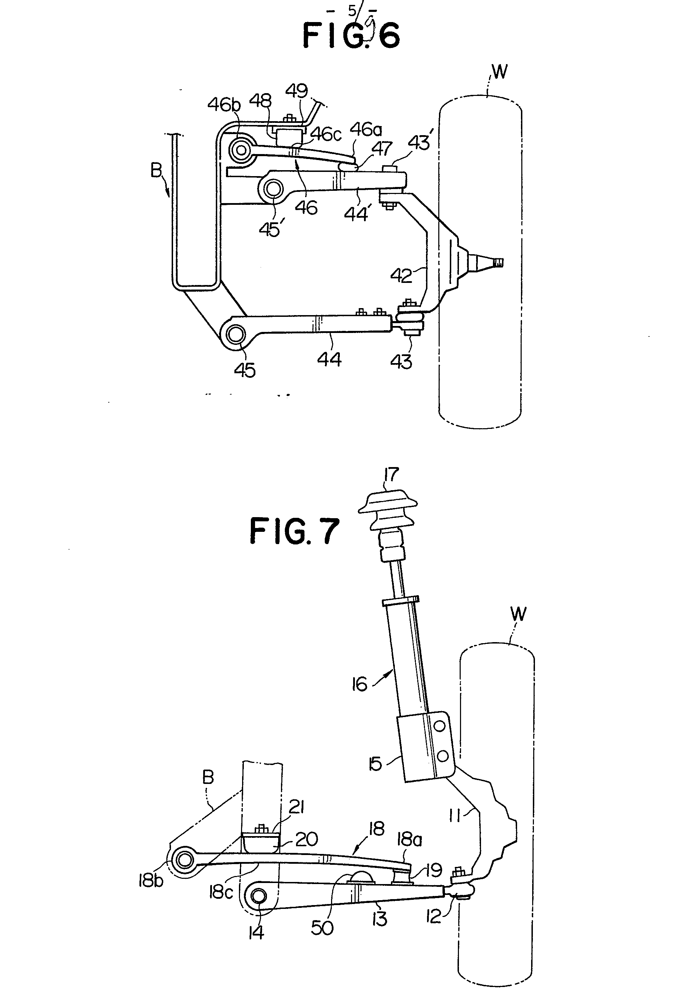

Fig. 6 of the drawings shows a third preferred embodiment of an independent wheel suspension mechanism according to the present invention. The wheel suspension mechanism herein shown is of the type which is known as the double-wishbone type. The double-wishbone independent wheel suspension mechanism is also shown intervening between the body structure B and a wheel axle assembly (not shown) for a road wheel W. The suspension mechanism shown in Fig. 6 is also one of the right and second wheel suspension mechanisms respectively arranged in conjunction with the two front or rear road wheels and the associated wheel axle assemblies of an automotive vehicle and, thus, the other of the two suspension mechanisms is a symmetrical version of the suspension mechanism herein shown. The shown wheel suspension mechanism comprises a knuckle spindle 42 having a spindle portion journaled in bearings (not shown) on the wheel axle. The knuckle spindle 42 further has upper and lower arm portions projecting inwardly in lateral directions of the vehicle body structure B. The lower arm portion of the knuckle spindle 42 is connected by a ball-and-socket joint 43 to a lower transverse link member 44 longitudinally extending in a lateral direction of the vehicle body structure B. The lower transverse link member 44 thus connected at the laterally outer end thereof to the knuckle spindle 42 is connected at the laterally inner end thereof to a lower structural wall portion of the vehicle body structure B by means of a rubber bush assembly 45. The knuckle spindle 42 is thus pivotally and rockably connected to the lower transverse link member 44 which is pivotally connected to the vehicle body structure B. On the other hand, the upper arm portion of the knuckle spindle 42 is connected by a ball-and-socket joint 43' to an upper transverse link member 44' longitudinally extending in parallel with and above the lower transverse link member 44. The upper transverse link member 44' thus connected at the laterally outer end thereof to the knuckle spindle 42 is connected at the laterally inner end thereof to an upper structural wall portion of the vehicle body structure B by means of a rubber bush assembly 45'. The knuckle spindle 42 is thus pivotally and rockably connected by the ball-and-socket joints 43 and 43' to the transverse link members 44 and 44', respectively, each of which is pivotally connected to the vehicle body structure B. The lower and upper transverse link members 44 and 44' form part of a double-crank four-bar linkage with the two cranks constituted by the lower and upper transverse link members 44 and 44' and the coupler constituted by the knuckle spindle 42. Thus, the road wheel W and the wheel axle (not shown) carrying the wheel W is movable upwardly and downwardly with respect to the vehicle body structure B as the lower and upper transverse link members 44 and 44' are caused to turn about the rubber bush assemblies 45 and 45', respectively.

The wheel suspension mechanism shown in Fig. 6 further comprises a leaf spring 46 longitudinally extending substantially in a lateral direction of the vehicle body structure B in part above the upper transverse link member 44'. The leaf spring 46 has a laterally outer end portion 46a, a laterally inner end portion 46b, and an intermediate portion constituting a fulcrum portion 46c which is located at a predetermined distance from the inner end portion 46b. The outer end portion 46a is held in pressing engagement with a laterally outer end portion of the upper transverse link member 44' through an elastic member 47 of, for example, rubber, while the inner end portion 46b of the leaf spring 46 is pivotally connected to a lower structural member of the vehicle body structure B as shown. The leaf spring 46 is thus rockable in its entirety about an axis fixed with respect to the vehicle body structure B and directed substantially in a fore-and-aft direction of the vehicle. On the other hand, the intermediate fulcrum portion 46c of the leaf spring 46 has its upper face elastically held in contact with an elastic pivot member 48 of, for example, rubber, secured to the vehicle body structure B by means of a bracket member 49. If desired, the fulcrum portion 46c of the leaf spring 46 may be securely and rigidly connected to the vehicle body structure B directly, viz., without intervention of the elastic pivot member 48. The leaf spring 46 arranged as described above is also preferably constructed of a fiber reinforced plastic such as the glass fiber reinforced plastic or the carbon fiber reinforced plastic.

The leaf spring 46 thus intervening between the upper transverse link member 44' and the vehicle body structure B in the wheel suspension mechanism constitutes a cantilever extending from the laterally inner end portion 46b thereof and having its laterally outer end portion 46a elastically pressed downwardly with respect to the vehicle body structure B. The knucle spindle 42 to which the upper transverse link member 44' is coupled at the laterally outer end thereof is therefore elastically connected to the vehicle body structure B by means of the leaf spring 46 so that the shocks and vibrations produced in vertical directions in the knucle spindle 42 and accordingly in the upper transverse link member 44' are taken up by the leaf spring 46 before the shocks and vibrations are transferred to the vehicle body structure B. The leaf spring 46 in the embodiment above described is arranged in association with the upper transverse link member 44' may be provided in association with the lower transverse link member 44.

Since a leaf spring 46 is used in lieu of a helical compression spring as used in a prior-art wheel suspension mechanism in the double-wishbone independent wheel suspension mechanism hereinbefore described, the designer of an automotive vehicle to be equipped with the suspension mechanism is permitted to sufficiently reduce the height of the front engine hood when in designing and engineering the vehicle. Since, furthermore, there are no such members as the helical compression spring and the associated spring seat flange members provided in conjunction with the strut assembly 16 in the wheel suspension mechanism, an ample space is available for the installation of the wheel suspension system in an automotive vehicle, providing improved drivability of the vehicle. Using a fiber reinforced plastic such as the glass or carbon fiber reinforced plastic as the material of the leaf spring 46 will also contribute to reduction of the weight of the wheel suspension system and accordingly the total weight of the vehicle as a whole. The invention applied to an independent wheel suspension system of the double-wishbone type will further afford an increased degree of freedom in selecting the wheel alignment of the vehicle.

The leaf spring used in each of the embodiments of the present invention as hereinbefore described has a linear spring characteristic. If the leaf spring is selected to have a relatively small spring constant with a view to providing comfort of driving during cruising on a smooth-surfaced road, the vehicle tends to roll excessively and thus impairs the drivability and comfort of driving when making a turn. Figs. 7 to 10 of the drawings show embodiments of the present invention to provide solutions to such a problem.

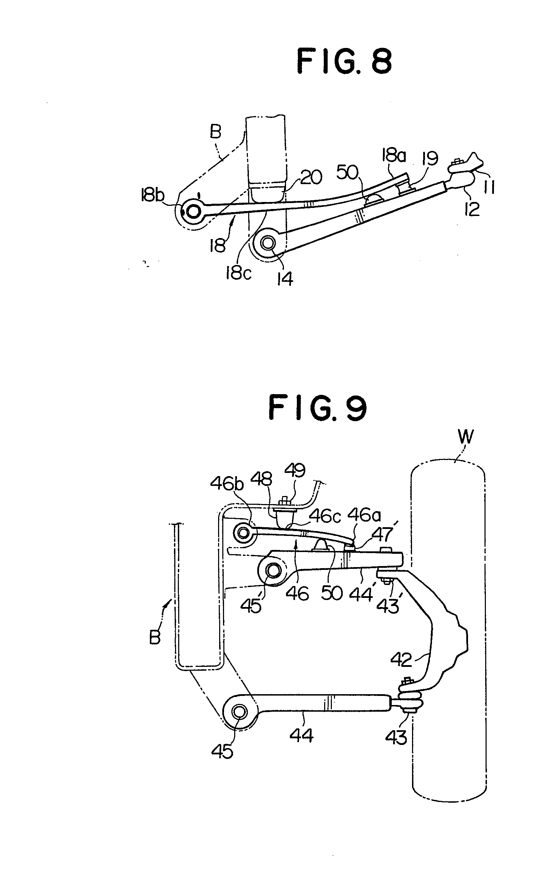

The embodiment shown in Fig. 7 is a modification of the embodiment described with reference to Fig. 2 and comprises all the component members and units described with reference to Fig. 2. In the embodiment shown in Fig. 7, however, the elastic member 19 is used as a main elastic member in combination with an auxiliary elastic member 50. The auxiliary elastic member 50 is securely attached to the upper face of the transverse link member 13 at a predetermined distance from the main elastic member 19 and is thus located below the leaf spring 18. When the vehicle has its body structure B held in a normal position with respect to the road surface, the leaf spring 18 has an effective length equal to the distance between the outer and inner end portions 18a and 18b of the spring 18. When, however, the vehicle is making a turn and is caused to roll slightly on the road surface, the leaf spring 18 is forced to warp downwardly toward the transverse link member 13 and is brought into contact with the auxiliary elastic member 50 on the link member 13 as shown in Fig. 8. The weight of the vehicle is thus transmitted to the link member 13 by way of the auxiliary elastic member 50 in lieu of the main elastic member 19. It therefore follows that the effective length of the leaf spring 18 is reduced to the distance between the outer end portion 18a of the leaf spring 18 and the auxiliary elastic member 50 on the transverse link member 13 and provides a spring characteristic different from that achieved under normal conditions of the vehicle. Similar results can be achieved if the auxiliary elastic member 50 is secured to the lower face of the leaf spring 18.

The embodiment shown in Fig. 9, is a modification of the embodiment of Fig. 6 and is incorporated in an independent wheel suspension system of the double-wishbone type. In the wheel suspension mechanism shown in Fig. 9, an auxiliary elastic member 50 is provided in combination with the elastic member 47 between the upper transverse link member 44' and the leaf spring 46, the elastic member 47 being thus used as a main elastic member. The auxiliary elastic member 50 is securely attached to the upper face of the upper transverse link member 44' at a predetermined distance from the main elastic member 47 and is thus located below the leaf spring 46. When the vehicle has its body structure B held in a normal position with respect to the road surface, the leaf spring 46 has an effective length equal to the distance between the outer and inner end portions 46a and 46b of the spring 46. When, however, the vehicle is making a turn and is caused to roll slightly on the road surface, the leaf spring 46 is forced to warp downwardly and is brought into contact with the auxiliary elastic member 50 in the same manner as that of the leaf spring 18 in Fig. 7. The auxiliary elastic member 50 may be secured to the lower face of the leaf spring

0058950

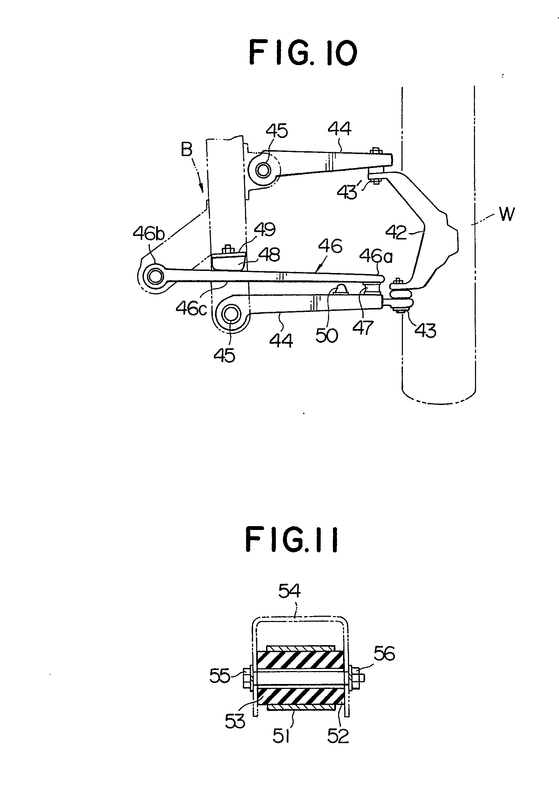

46 if desired. Shown in Fig. 10 is the embodiment in which the leaf spring 46 having the elastic member 47 and the elastic pivot member 48 is provided in conjunction with the lower transverse link member 44 and arranged with an auxiliary elastic member 50 securely attached to the upper face of the transverse link member 44. It will be apparent that the embodiment thus arranged provides results similar to those attained in the embodiment of Fig. 7.

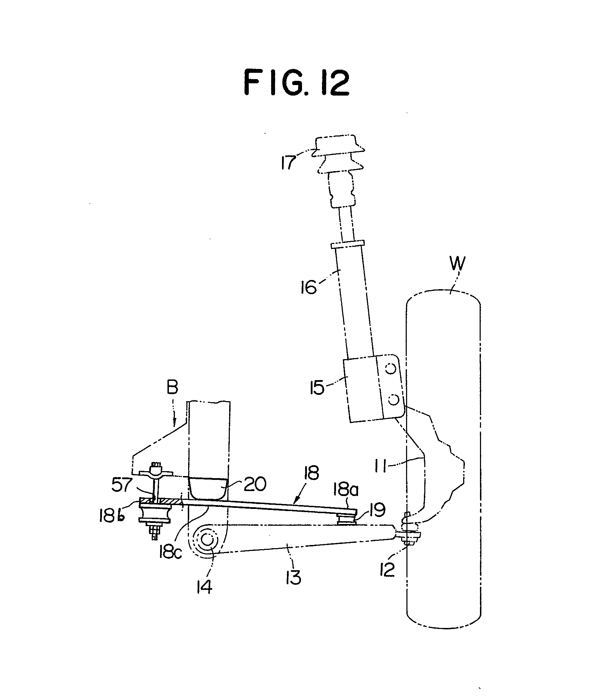

The rubber bush assembly elastically connecting the leaf spring to the vehicle body structure at the laterally inner end of the spring in each of the embodiments (except for the embodiment of Fig. 3) of the present invention as hereinbefore described has a construction illustrated in Fig. 11 of the drawings. As shown, the bush assembly comprises a sleeve 51 and a cylindrical rubber bush 52 closely and coaxially received in the sleeve 51. A cylindrical pin 53 is loosely passed through the axial bore in the rubber bush 52 and is securely connected at the opposite axial ends thereof to a generally U-shaped bracket member 54 having a pair of arm portions secured to the pin 53 by a bolt 55 and a nut 56. The bracket member 54 is rigidly connected to the vehicle body structure B in a suitable manner. Dimensional errors tend to be involved when in manufacturing such a bush assembly and assembling the leaf spring to the vehicle body structure by the use of the bush assembly. Difficulties are, furthermore, encountered when in adjusting the clearance of the vehicle over road surface for remedying the misalignment of the road wheels. Fig. 12 of the drawings shows an independent wheel suspension mechanism using an improved bush assembly for assembling a leaf spring to the vehicle body structure B. In Fig. 12, the suspension mechanism is shown, by way of example, as a modification of the embodiment of Fig. 2 and thus comprises a leaf spring 18. The leaf spring 18 of the suspension mechanism shown in Fig. 12 differs from the leaf spring 18 of the embodiment of Fig. 2 in that the leaf spring 18 of the embodiment of Fig. 12 has a vertically open hole 57 formed in its laterally inner end portion 18b.

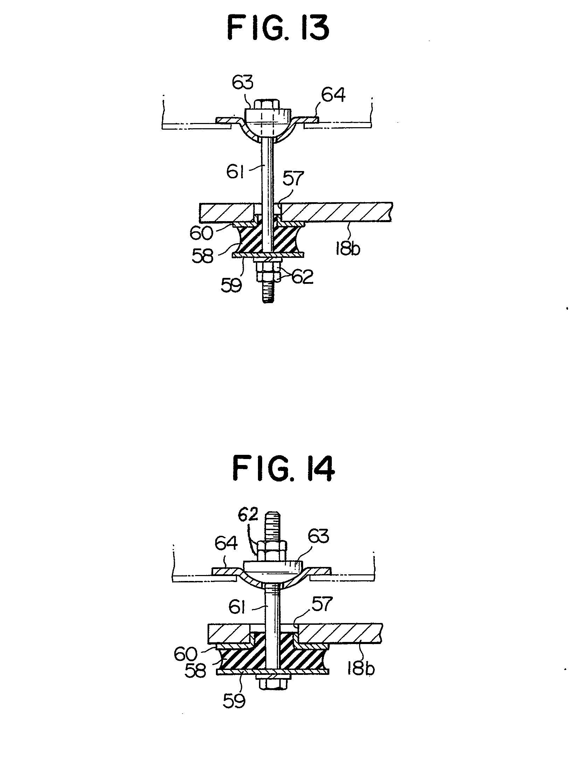

As shown in Fig. 12 and to an enlarged scale in Fig. 13, such an improved bush assembly comprises an elastic member 58 of, for example, rubber and lower and upper end plates 59 and 60 having the elastic member 58 securely interposed therebetween. The elastic member 58 and the end plates 59 and 60 have axial openings aligned with one another and have a rigid elongated member 61 axially passed therethrough. The elongated bolt or bolt 61 is further axially passed through the hole 57 in the laterally inner end portion of the above mentioned leaf spring 18 and has a threaded end portion projecting downwardly from the lower end plate 59. The subassembly of the elastic member 58, end plates 59 and 60 and elongated bolt 61 is securely connected to the leaf spring 18 by means of clamping nuts 62 fitted to the threaded lower end portion of the elongated bolt 61 tightly against the outer face of the lower end plate 59 so that the upper end plate 60 is closely attached to the lower surface of the inner end portion 18b of the leaf spring 18. The elongated bolt 61 has at its upper end a head portion securely connected to a pivot element 63 having a semispherical lower portion slidably received on the downwardly semispherical upper surface of a bearing member 64 which is secured to the vehicle body structure B and which is formed with a downwardly directed opening. The elongated bolt 61 is thus pivotally movable in any direction about a point contained in the pivot element 63 and permits the leaf spring 18 to pivotally move not only with respect to the bolt 61 due to the elasticity of the elastic member 58 but also to the vehicle body structure B due to the pivotal displacement of the bolt 61. Thus, the elongated bolt 61 functions to take up the force to be transmitted from the leaf spring 18 to the body structure B and further serves as means for adjusting the clearance of the vehicle over road surface by turning the nuts 62 on the threaded lower end portion of the bolt 61 so as to vary the effective length of the bolt 61. The pivot element 63 not only permits the leaf spring 18 to pivotally move with respect to the vehicle body structure B but prevents the elongated bolt 61 from being subjected to a bending stress when the leaf spring 18 is moved or deformed with respect to the body structure B.

While the elongated bolt 61 in the bush assembly above described with reference to Figs. 12 and 13 has its threaded end portion projecting downwardly from the lower end plate 59, the bolt 61 may be used in such a manner that the bolt 61 has its head portion at the lower end thereof and has the pivot element 63 fitted to its threaded end portion projecting upwardly through the opening in the bearing member 64 as shown in Fig. 14 of the drawings. In this instance, the subassembly

- 24 -

0058950

of the elastic member 58, end plates 59 and 60 and elongated bolt 61 is securely connected to the leaf spring 18 by means of the clamping nuts 62 fitted to the threaded upper end portion of the elongated bolt 61 tightly against the upper face of the pivot element 63 so that the upper end plate 60 is closely attached to the lower surface of the inner end portion of the leaf spring 18 with the head portion of the bolt 61 tightened against the outer face of the lower end plate 59.

- 25 -

CLAIMS

0058950

1. An independant wheel suspension mechanism of an automotive vehicle having a vehicle body structure and a wheel axle for a road wheel, comprising a knuckle member having the wheel axle rotatably supported thereon, at least one transverse link member at least partially extending substantially in a lateral direction of the vehicle and pivotally connected at one end thereof to said knuckle member and at the other end thereof to the vehicle body structure, the transverse link member being thus rockable at said other end thereof about an axis fixed with respect to the vehicle body structure and directed substantially in a fore-and-aft direction of the vehicle, c h a r a c t e r i z e d by at least one leaf spring (18,29,46) extending at least in part substantially in parallel with and above said transverse link member (13,26,44,44'), the leaf spring (18,29,46) having one end portion (18a,29a,46a) held in elastically pressing engagement with one end portion of said transverse link member (13,...) and being connected at the other end (18b,29b,46b) thereof to the vehicle body structure (B).

2. A wheel suspension mechanism as set forth in claim 1, c h a r a c t e r i z e d in that said leaf spring (18, 29,46) has its laterally outer end portion (18a,29a,46a) held in elastically pressing engagement with said end portion of the transverse link member (13,...) in a vertical direction and is connected at its laterally inner end (18b, 29b,46b) to the vehicle body structure (B).

3. A wheel suspension mechanism as set forth in claim 2, c h a r a c t e r i z e d  in that said leaf spring (18,29, 46) has said laterally outer end portion (18a,29a,46a) held in downwardly pressing engagement with said end portion of the transverse link member (13,...).

4. A wheel suspension mechanism as set forth in claim 1, 2 or 3, c h a r a c t e r i z e d  in that said leaf spring (29) is securely connected at said other end (29b) to the vehicle body structure (B).

5. A wheel suspension mechanism as set forth in claim 1, 2 or 3, c h a r a c t e r i z e d  in that said leaf spring (18,46) is pivotally connected at said other end (18b,46b) to the vehicle body structure (B) and is rockable about an axis fixed with respect to the vehicle body structure (B) and directed substantially in a fore-and-aft direction of the vehicle.

6. A wheel suspension mechanism as set forth in any of the above claims, c h a r a c t e r i z e d  by an elastic member (19,30,47) closely interposed between said one end portion (18a,29a,46a) of the leaf spring (18,29,46) and said one end portion of said transverse link member (13,...).

7. A wheel suspension mechanism as set forth in any of the claims  1,2 or 3, c h a r a c t e r i z e d  in that said leaf spring (18,29,46) has an intermediate fulcrum portion (18c,29c,46c) held in engagement with said vehicle body structure (B).

8. A wheel suspension mechanism as set forth in claim 7, c h a r a c t e r i z e d  by an elastic pivot member (20, 35,48) closely interposed between said intermediate fulcrum portion (18c,29c,46c) and the vehicle body structure (B).

9. A wheel suspension mechanism as set forth in claim 8, c h a r a c t e r i z e d  in that said leaf spring (29) is securely connected at said other end (29b) to the vehicle body structure (B).

10. A wheel suspension mechanism as set forth in claim 8, c h a r a c t e r i z e d  in that said leaf spring (18, 46) is pivotally connected at said other end (18b,46b) to the vehicle body structure (B) and is rockable about an axis fixed with respect to the vehicle body structure (B) and directed substantially in a fore-and-aft direction of the vehicle.

11. A wheel suspension mechanism as set forth in any of the above claims, c h a r a c t e r i z e d  by an auxiliary elastic member (50) securely  attached to the upper face of said transverse link member (13,...) and normally spaced apart downwardly from said leaf spring (18,29,46).

12. A wheel suspension mechanism as set forth in any of the claims 1 to 10, c h a r a c t e r i z e d  by an auxi-

liary elastic member securely attached to the lower face of said leaf spring (18,29,46) and normally spaced apart upwardly from said transverse link member (13...).

13. A wheel suspension mechanism as set forth in claim 5 or 10, c h a r a c t e r i z e d in that said leaf spring (18) has an opening (57) formed in a laterally inner end portion (18b) thereof, the suspension mechanism further comprising a bush assembly through which said leaf spring (18) is pivotally connected at said other end (18b) to the vehicle body structure (B), the bush assembly comprising an elastic member (58), lower and upper end plates (59, 60) having the elastic member (58) closely interposed therebetween, and a rigid elongated member (61) axially extending through the opening (57) in said leaf spring (18) and having one end portion connected to the combination of the elastic member (58) and the end plates (59, 60) and the other end portion connected to the vehicle body structure (B).

14. A wheel suspension mechanism as set forth in claim 13, c h a r a c t e r i z e d in that said bush assembly comprises a bearing member (64) secured to the vehicle body structure (B) and having a downwardly semispherical upper surface and a downwardly directed opening, a pivot element (63) having a semispherical lower portion slidably received on said semispherical upper surface of the bearing member (64), said elongated member (61) being connected at said other end thereof to said pivot element (63) through the opening in said bearing member (64).

15. A wheel suspension mechanism as set forth in claim 14, c h a r a c t e r i z e d in that said elongated member (61) has a threaded end portion having adjustably fitted thereon at least one nut (62) tightened against one of said end plates (59) so that the other of the end plates (60) is tightened against the lower surface of said leaf spring (18).

16. A wheel suspension mechanism as set forth in claim 14, c h a r a c t e r i z e d in that said elongated member (61) has a threaded end portion having adjustably fitted thereon at least one nut (62) tightened against said pivot element (63) so that one of said end plates (59) is tightly engaged by a lower end portion of the elongated member (61) and the other of the end plates (60) is tightened against the lower surface of said leaf spring (18).

- 1/9

# FIG. 1
## PRIOR ART

$-\dfrac{2}{9}-$

# FIG. 2

FIG. 3

0058950

- 4/9 -

## FIG. 4

## FIG. 5

## FIG. 6

## FIG. 7

- 6/9 -

## FIG. 8

## FIG. 9

# FIG. 10

# FIG.11

- 8/9 -

# FIG. 12

0058950

- 9/9 -

## FIG. 13

## FIG. 14